# EUROPÄISCHE PATENTSCHRIFT

(11) **EP 2 990 173 B1**
(45) Veröffentlichungstag und Bekanntmachung des Hinweises auf die Patenterteilung: **21.02.2018**
(21) Anmeldenummer: 15182440.6
(22) Anmeldetag: 26.08.2015
(51) Int. Cl.: B29B 17/02, B62D 29/00, B62D 35/00, B62D 29/04

(54) **KRAFTFAHRZEUGBAUTEIL UND VERFAHREN ZUR HERSTELLUNG EINES KRAFTFAHRZEUGBAUTEILS**
MOTOR VEHICLE COMPONENT AND METHOD FOR MANUFACTURING SAME
PIECE AUTOMOBILE ET PROCEDE DE FABRICATION D'UNE PIECE AUTOMOBILE

(30) Priorität: 01.09.2014 DE 102014112520
(43) Veröffentlichungstag der Anmeldung: 02.03.2016
(73) Patentinhaber: REHAU AG + Co, 95111 Rehau (DE)
(72) Erfinder: Vogel, Matthias, 95233 Helmbrechts (DE); Krist, Matthias, 95030 Hof (DE)

(56) Entgegenhaltungen:
- EP-A2- 2 674 666
- DE-A1- 4 004 640
- DE-A1-102011 016 941
- US-A1- 2004 035 756

## Beschreibung

Die vorliegende Erfindung betrifft ein Kraftfahrzeugbauteil und ein Verfahren zur Herstellung eines Kraftfahrzeugbauteils.

Aus dem Stand der Technik bekannte Kraftfahrzeugbauteile mit einem Funktionselement aus einem ersten polymeren Werkstoff und mit wenigstens einem mit dem Funktionselement verbundenen Befestigungselement aus einem zweiten polymeren Werkstoff, weisen im Hinblick auf das Recycling und/oder die Möglichkeit der Nutzung als Rücklaufmaterial im Herstellverfahren des Kraftfahrzeugbauteils den Nachteil auf, dass die sortenreine Trennung der beiden polymeren Werkstoffe oft nur manuell mit einer entsprechend hohen Fehlerhäufigkeit oder mit kostenintensivem apparativem Aufwand gewährleistet werden kann.

Der zweite polymere Werkstoff des Befestigungselementes muss aufgrund seiner Funktion in der Regel höhere mechanische Festigkeiten als der erste polymere Werkstoff des Funktionselements aufweisen, so dass für den zweiten polymeren Werkstoff ein zu dem ersten polymeren Werkstoff artfremder und/oder verstärkter Werkstoff eingesetzt werden muss. Gattungsgemäße Kraftfahrzeugbauteile sind der EP 2 674 666 A2 und der
DE 10 2011 016 941 A1 zu entnehmen. Insbesondere bei der Nutzung als Rücklaufmaterial im Herstellungsverfahren des Kraftfahrzeugbauteils bzw. des Funktionselementes darf der erste polymere Werkstoff dann nicht mit dem Material des zweiten polymeren Werkstoffes verunreinigt werden, da ansonsten die Qualität des Kraftfahrzeugbauteils bzw. des Funktionselementes eingeschränkt bis unakzeptabel wird.

Bei dem Recycling von Kraftfahrzeugbauteilen oder deren Nutzung als Rücklaufmaterial wird das Kraftfahrzeugbauteil zunächst in der Regel mechanisch zerkleinert und dabei das Befestigungselement und das Funktionselement wieder voneinander getrennt, so dass sich das Befestigungselement oder Teile des Befestigungselementes zwischen dem Funktionselement oder den Teilen des Funktionselementes befinden und voneinander separiert werden müssen.

Die Erfindung stellt sich daher die Aufgabe ein Kraftfahrzeugbauteil und ein Verfahren zur Herstellung eines Kraftfahrzeugbauteils mit einem Funktionselement aus einem ersten polymeren Werkstoff und mit wenigstens einem mit dem Funktionselement verbundenen Befestigungselement aus einem zweiten polymeren Werkstoff anzugeben, das gegenüber dem Stand der Technik zuverlässig und kostengünstig wieder in Funktionselement und Befestigungselement separiert werden kann.

Erfindungsgemäß wird diese Aufgabe durch ein Kraftfahrzeugbauteil mit einem Funktionselement aus einem ersten polymeren Werkstoff und mit wenigstens einem mit dem Funktionselement verbundenen Befestigungselement aus einem zweiten polymeren Werkstoff gelöst, dessen zweiter polymerer Werkstoff metallische Detektionselemente umfasst, die eine Detektion des Befestigungselementes und/oder von Teilen des Befestigungselementes ermöglichen.

Das erfindungsgemäße Kraftfahrzeugbauteil mit einem Funktionselement aus einem ersten polymeren Werkstoff und mit wenigstens einem mit dem Funktionselement verbundenen Befestigungselement aus einem zweiten polymeren Werkstoff, wobei der zweite polymere Werkstoff metallische Detektionselemente umfasst, die eine Detektion des Befestigungselementes und/oder von Teilen des Befestigungselementes ermöglichen, erlaubt es z.B. mittels eines einfachen Metalldetektors das Befestigungselement oder Teile des Befestigungselementes zu detektieren und dann das Befestigungselement oder Teile des Befestigungselementes von dem Funktionselement oder von den Teilen des Funktionselementes, und somit die beiden polymeren Werkstoffe, zuverlässig zu separieren. Derartige Metalldetektoren sind zum Teil bereits bei der Herstellung von Funktionselementen in einem Blasform- oder Spritzgussverfahren an den entsprechenden Herstellanlagen vorgesehen, wobei diese hier allein der Detektion von eingeschleppten Verunreinigungen in dem eingesetzten ersten polymeren Werkstoff dienen, um die Extruder- oder Spritzgussanlage vor einer Beschädigung zu schützen. Das gezielte Beifügen von metallischen Detektionselementen zu dem zweiten polymeren Werkstoff des Befestigungselementes ermöglicht es dann diese bereits vorhandenen Metalldetektoren auch für die zuverlässige Separierung des Befestigungselementes oder von Teilen des Befestigungselementes von dem Funktionselement oder von Teilen des Funktionselementes zu nutzen.

Das Funktionselement ist ein blasgeformtes oder spritzgegossenes Funktionselement. Weiterhin kann das Befestigungselement form- und/oder kraft- und/oder stoffschlüssig mit dem Funktionselement verbunden sein. Das Befestigungselement kann insbesondere mittels einer Klebeverbindung, Rastverbindung, Schweißverbindung, Schraubverbindung, Klemmverbindung, Pressverbindung, und/oder Formschlussverbindung mit dem Funktionselement verbunden sein oder werden.

Bevorzugt ist das Funktionselement ein blasgeformtes oder spritzgegossenes Funktionselement, wobei das, vorzugsweise separat hergestellte, Befestigungselement form- und/oder kraft- und/oder stoffschlüssig bei dem Blasformen oder bei dem Spritzgießen des Funktionselements mit dem Funktionselement verbunden wird.

Bevorzugt kann der zweite polymere Werkstoff Verstärkungsfasern und/oder Verstärkungspartikel umfassen. Insbesondere Kreide, Sand, Kieselgur, Glasfasern oder Glaskugeln, Zinkoxid, Quarz, Holzmehl, Stärke, Graphit, Ruße und/oder Talkum eignen sich als Verstärkungsfasern und/oder Verstärkungspartikel.

Im Rahmen der Erfindung kann das gleiche polymere Material für den ersten polymeren Werkstoff und den zweiten polymeren Werkstoff eingesetzt werden, wobei sich der erste polymere Werkstoff und der zweite polymere Werkstoff durch den Zusatz von Verstärkungsfasern und/oder Verstärkungspartikeln voneinander unterscheiden. Auch hierbei kann bevorzugt der zweite polymere Werkstoff die Verstärkungsfasern und/oder die Verstärkungspartikel umfassen.

Das Befestigungselement ist durch eine Schraubenaufnahme, oder eine Schraube oder eine Rastelement oder ein Verschweißungselement gebildet. Eine Schraubaufnahme kann insbesondere ein Schraubdom oder eine Steckmutter sein. Ein Verschweißungselement ist bevorzugt durch einen zweiten polymeren Werkstoff gebildet, der gegenüber dem ersten polymeren Werkstoff des Funktionselementes eine bessere Schweißbarkeit aufweist.

Das Kraftfahrzeugbauteil ist ein Luftleitelement, insbesondere ein Spoiler, oder ein Verkleidungsteil oder eine Zierleiste. Die Erfindung eignet sich insbesondere für blasgeformte Kraftfahrzeugbauteile, wie beispielsweise Luftleitelemente, da bei der Blasformfertigung in der Regel eine vergleichsweise hohe Anzahl von Schlechtteilen erzeugt und gleichzeitig ein hoher Anteil von Rücklaufmaterial für die Herstellung des Kraftfahrzeugbauteils bzw. des Funktionselementes verwendet wird.

Die metallischen Detektionselemente sind bevorzugt platten-, kugel- oder nadelförmig ausgebildet. Ferner sind Mischformen der vorgenannten Gestaltungen denkbar. Die metallischen Detektionselemente können bevorzugt Aluminium und/oder Kupfer und/oder Nickel und/oder Kobalt und/oder Chrom und/oder Eisen und/oder Oxide der vorgenannten Metalle umfassen.

Ein erfindungsgemäßes Verfahren zur Herstellung eines Kraftfahrzeugbauteils, umfasst die folgenden Schritte:
- Bereitstellen eines Funktionselementes aus einem ersten polymeren Werkstoff,
- Verbinden eines Befestigungselementes aus einem zweiten polymeren Werkstoff mit dem Funktionselement,
wobei der zweite polymere Werkstoff metallische Detektionselemente umfasst, die eine Detektion des Befestigungselementes und/oder von Teilen des Befestigungselementes ermöglicht.

Das Bereitstellen des Funktionselementes erfolgt durch einen Blasformungsschritt in einem Blasformwerkzeug oder durch einen Spritzgussschritt in einem Spritzgusswerkzeug. Bevorzugt erfolgt das Verbinden des Befestigungselementes hierbei durch ein stoff- und/oder kraft- und/oder formschlüssiges Verbinden während des Blasformschrittes oder während des Spritzgussschrittes.

In dem Verfahren ist ein Kontrollschritt zur Erkennung von fehlerhaft hergestellten Bauteilen vorgesehen, wobei bei Vorliegen eines fehlerhaften Bauteiles in einem Schritt a) das Befestigungselement von dem Funktionselement separiert wird, um das Funktionselement oder Teile des Funktionselementes und/oder das Befestigungselement oder Teile des Befestigungselementes als Rücklaufmaterial nutzen zu können, wobei in einem Schritt b) in dem Rücklaufmaterial des Funktionselementes ein nicht-separiertes Befestigungselement oder nicht-separierte Teile des Befestigungselementes mittels einer, die metallischen Detektionselemente erfassenden, Detektionsvorrichtung erkannt und bei Vorhandensein eines Befestigungselementes oder von Teilen des Befestigungselementes in dem Rücklaufmaterial des Funktionselementes der Schritt a) wiederholt wird, bis kein Befestigungselement oder keine Teile des Befestigungselementes in dem Rücklaufmaterial des Funktionselementes mehr vorhanden ist oder sind.

Weiter bevorzugt kann in dem Verfahren ein Kontrollschritt zur Erkennung von fehlerhaft hergestellten Bauteilen vorgesehen sein, wobei bei Vorliegen eines fehlerhaften Bauteiles in einem Schritt a) das Befestigungselement von dem Funktionselement separiert wird, um das Funktionselement oder Teile des Funktionselementes und/oder das Befestigungselement oder Teile des Befestigungselementes als Rücklaufmaterial nutzen zu können, wobei in einem Schritt b) in dem Rücklaufmaterial des Funktionselementes ein nicht-separiertes Befestigungselement oder nicht-separierte Teile des Befestigungselementes mittels einer, die metallischen Detektionselemente erfassenden, Detektionsvorrichtung erkannt und bei Vorhandensein eines Befestigungselementes oder von Teilen des Befestigungselementes in dem Rücklaufmaterial des Funktionselementes der Schritt a) und der Schritt b) wiederholt werden, bis kein Befestigungselement (4) oder keine Teile des Befestigungselementes (4) in dem Rücklaufmaterial des Funktionselementes (2) mehr vorhanden ist oder sind.

Sowohl für das erfindungsgemäße Kraftfahrzeugbauteil als auch für das erfindungsgemäße Verfahren zur Herstellung eines Kraftfahrzeugbauteils haben sich für den zweiten polymeren Werkstoff des Befestigungselements als bevorzugte Materialien Polysulfon (PSU), Poly(ethersulfone) (PES), Polyetherimide (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE) oder Mischungen der vorgenannten Materialen erwiesen.

Sowohl für das erfindungsgemäße Kraftfahrzeugbauteil als auch für das erfindungsgemäße Verfahren zur Herstellung eines Kraftfahrzeugbauteils haben sich für den ersten polymeren Werkstoff des Funktionselementes Polyvinylchlorid (PVC), Polyethylen (PE), Polypropylen (PP), Acrylnitril-Butadien-Styrol (ABS) oder Mischungen der vorgenannten Materialien erwiesen.

Sowohl für das erfindungsgemäße Kraftfahrzeugbauteil als auch für das erfindungsgemäße Verfahren zur Herstellung eines Kraftfahrzeugbauteils haben sich metallische Detektionselemente als vorteilhaft erwiesen die platten-, kugel- oder nadelförmig ausgebildet sind. Ferner sind auch Mischformen der vorgenannten Gestaltungen denkbar. Die metallischen Detektionselemente umfassen bevorzugt Aluminium und/oder Kupfer und/oder Nickel und/oder Kobalt und/oder Eisen und/oder Oxide der vorgenannten Metalle. Der zweite polymere Werkstoff kann wenigstens 0,1 Gewichtsprozent, bevorzugt wenigstens 0,5 Gewichtsprozent, weiter bevorzugt wenigstens 1 Gewichtsprozent, weiter bevorzugt wenigstens 5 Gewichtsprozent metallische Detektionselemente umfassen.

### Ausführungsbeispiele

Im Folgenden wird die Erfindung anhand lediglich Ausführungsbeispiele darstellender Zeichnungen erläutert. Es zeigen schematisch:
- Fig. 1: einen Querschnitt durch ein erfindungsgemäßes Kraftfahrzeugbauteil,
- Fig. 2: eine Detaildarstellung des Kraftfahrzeugbauteils aus Fig. 1,
- Fig. 3: eine Teilansicht eines erfindungsgemäßen Kraftfahrzeugbauteils,
- Fig. 4: eine Detaildarstellung des Befestigungselementes aus Fig. 3,
- Fig. 5: eine weitere Teilansicht eines erfindungsgemäßen Kraftfahrzeugbauteils.

In den Figuren werden gleiche oder funktionsgleiche Elemente mit den gleichen Bezugszeichen versehen.

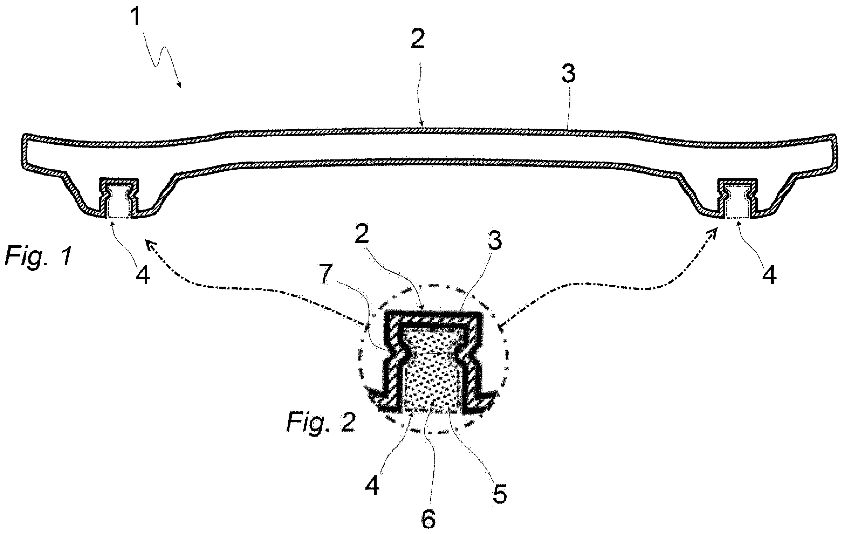

Die Fig. 1 zeigt einen Querschnitt durch ein erfindungsgemäßes Kraftfahrzeugbauteil 1, nämlich ein Luftleitelement in Gestalt eines Spoilers. Das Kraftfahrzeugbauteil 1 weist ein Funktionselement 2 aus einem ersten polymeren Werkstoff 3 und wenigstens ein mit dem Funktionselement 2 verbundenes Befestigungselement 4 aus einem zweiten polymeren Werkstoff 5 auf. Das Funktionselement 2 übernimmt bei diesem Kraftfahrzeugbauteil 1 die Funktion der Luftleitung und beeinflusst dadurch, neben dem Design, die Aerodynamik des Kraftfahrzeuges, an welchem das Kraftfahrzeugbauteil 1 befestigt ist. Das Befestigungselement 4 dient der Befestigung an der Karosserie des Kraftfahrzeuges und / oder der Befestigung von weiteren Bauteilen des Fahrzeuges und/oder der Befestigung weiterer Anbauteile an das Kraftfahrzeugbauteil 1.

Das Funktionselement 2 ist in diesem Ausführungsbeispiel ein blasgeformtes Funktionselement 2, d.h. die Bereitstellung des Funktionselements 2 ist durch einen Blasformungsschritt in einem Blasformwerkzeug erfolgt. Hierbei ist das Verbinden des Befestigungselementes 4 mit dem Funktionselement 2 durch ein stoff- und/oder kraft- und/oder formschlüssiges Verbinden während des Blasformschrittes erfolgt. Wie in Fig. 2 im Detail vergrößert dargestellt weist das Befestigungselement 4 hierzu einen Hinterschnitt 7 in Gestalt einer umlaufenden Ringnut auf, um den sich das Funktionselement 2 bei dessen Herstellung im Blasformwerkzeug gelegt hat. Aufgrund der Wärmekontraktion beim Abkühlen des Funktionselementes 2 nach dem Blasformschritt ist das Befestigungselement 4 nicht nur formschlüssig, sondern auch kraftschlüssig mit dem Funktionselement 2 verbunden. Je nach Verträglichkeit des ersten polymeren Werkstoffes mit dem zweiten polymeren Werkstoff kann sich das Befestigungselement 4 auch stoffschlüssig mit dem Funktionselement 2 verbinden.

Im Fall des Recyclings oder bei der gewünschten Nutzung des Funktionselementes 2 und/oder des Befestigungselementes 4 als Rücklaufmaterial muss eine Separierung von Befestigungselement 4 und Funktionselement 2 erfolgen, da der zweite polymere Werkstoff 5 des Befestigungselementes 4 Verstärkungsfasern und/oder Verstärkungspartikel umfasst. Zur Erreichung einer zuverlässigen und kostengünstigen Separation von Funktionselement 2 und Befestigungselement 4 umfasst der zweite polymere Werkstoff 5 metallische Detektionselemente 6, die eine Detektion des Befestigungselementes 4 und/oder von Teilen des Befestigungselementes 4 ermöglicht. Beispielsweise kann mittels eines einfachen Metalldetektors das Befestigungselement 4 oder Teile des Befestigungselementes 4 detektiert und dann das Befestigungselement 4 oder Teile des Befestigungselementes 4 von dem Funktionselement 2 oder Teilen des Funktionselementes 2, und somit die beiden polymeren Werkstoffe 3 und 5, separiert werden. Das Befestigungselement 4 ist durch eine Schraubenaufnahme gebildet, die beispielsweise eine selbstschneidende Schraube aufnehmen kann. Der zweite polymere Werkstoff 5 umfasst Polyamid (PA) und der erste polymere Werkstoff 3 umfasst Acrylnitril-Butadien-Styrol (ABS). Der zweite polymere Werkstoff 5 umfasst metallische Detektionselemente 6 im Bereich von 3 Gewichtsprozent bis 10 Gewichtsprozent, wobei die metallischen Detektionselemente aus einer Eisen oder Eisen-ChromNickellegierung bestehen.

Ein Verfahren zur Herstellung eines in Fig. 1 dargestellten Kraftfahrzeugbauteils umfasst die folgenden Schritte:
- Bereitstellen eines Funktionselementes 2 aus einem ersten polymeren Werkstoff 3,
- Verbinden eines Befestigungselementes 4 aus einem zweiten polymeren Werkstoff 5 mit dem Funktionselement 2,
wobei der zweite polymere Werkstoff 5 metallische Detektionselemente 6 umfasst, die eine Detektion des Befestigungselementes 4 und/oder von Teilen des Befestigungselementes 4 ermöglichen. Hierbei erfolgt das Bereitstellen des Funktionselementes 1 durch einen Blasformungsschritt in einem Blasformwerkzeug und das Verbinden des Befestigungselementes 4 mit dem Funktionselement 2 durch ein stoff- und/oder kraft- und/oder formschlüssiges Verbinden während des Blasformschrittes. Das Befestigungselement 4 wird folglich durch eine partielle Umhüllung in das Funktionselement 2 eingebettet.

Das Verfahren zur Herstellung des Kraftfahrzeugbauteils 1 weist zudem einen Kontrollschritt zur Erkennung von fehlerhaft hergestellten Bauteilen 1 auf, wobei bei Vorliegen eines fehlerhaften Bauteiles 1 in einem Schritt a) das Befestigungselement 4 von dem Funktionselement 2 separiert wird, um das Funktionselement 2 oder Teile des Funktionselementes 2 und/oder das Befestigungselement 4 oder Teile des Befestigungselementes 4 als Rücklaufmaterial nutzen zu können, wobei in einem Schritt b) in dem Rücklaufmaterial des Funktionselementes 2 ein nicht-separiertes Befestigungselement 4 oder nicht-separierte Teile des Befestigungselementes 4 mittels einer, die metallischen Detektionselemente 6 erfassenden, Detektionsvorrichtung erkannt und bei Vorhandensein eines Befestigungselementes 4 oder von Teilen des Befestigungselementes 4 in dem Rücklaufmaterial des Funktionselementes 2 der Schritt a), und vorzugsweise auch der Schritt b), wiederholt wird, bis kein Befestigungselement 4 oder keine Teile des Befestigungselementes 4 in dem Rücklaufmaterial des Funktionselementes 2 mehr vorhanden ist oder sind.

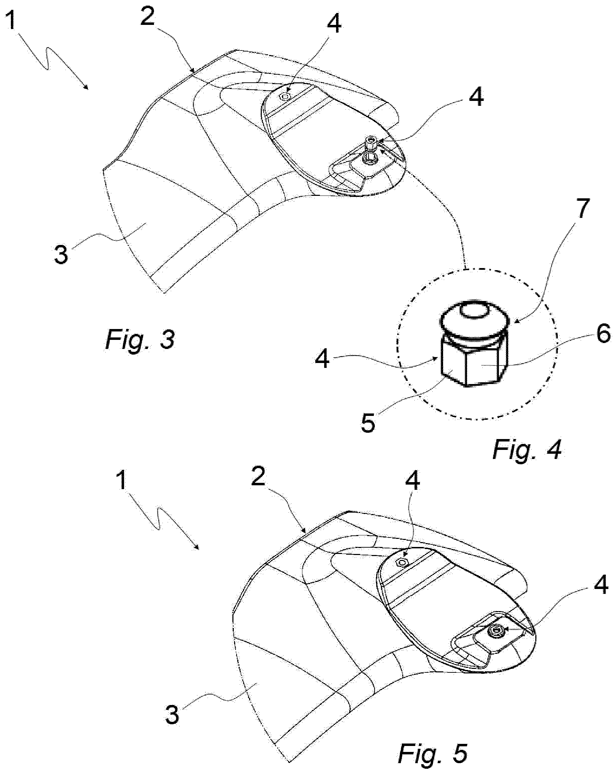

In Fig. 3 ist eine Teilansicht eines erfindungsgemäßen Kraftfahrzeugbauteils, nämlich eines spritzgegossenen Luftleitelementes, dargestellt. Das Kraftfahrzeugbauteil 1 weist ein Funktionselement 2 aus einem ersten polymeren Werkstoff 3 und wenigstens ein mit dem Funktionselement 2 verbundenes Befestigungselement 4 aus einem zweiten polymeren Werkstoff 5 auf. Das Befestigungselement 4 ist in Fig. 3 einmal im mit dem Funktionselement 2 verbunden Zustand und im unverbundenen Zustand dargestellt. Die Fig. 4 zeigt das Befestigungselement 4 in vergrößerter und um 180° gedrehter Darstellung dar, um eine umlaufende Ringnut zu erkennen, welche einen Hinterschnitt 7 in dem Befestigungselement 4 bildet.

Der zweite polymere Werkstoff 5 des Befestigungselementes 4 umfasst metallische Detektionselemente 6, die eine Detektion des Befestigungselementes 4 und/oder von Teilen des Befestigungselementes 4 ermöglichen. Wie vorstehend beschrieben handelt es sich bei dem in Fig. 3 gezeigten Kraftfahrzeugbauteil 1 um ein spritzgegossenes Luftleitelement, so dass das Funktionselement 2 ein spritzgegossenes Funktionselement 2 ist. Das mit dem Funktionselement 2 verbundene Befestigungselement 4 ist hierbei form- und/oder kraft- und/oder stoffschlüssig mit dem Funktionselement 2 verbunden. Der zweite polymere Werkstoff 5 umfasst Verstärkungsfasern und/oder Verstärkungspartikel, wobei das Befestigungselement 4 eine Schraubenaufnahme bildet.

Ein Verfahren zur Herstellung eines in Fig. 3 dargestellten Kraftfahrzeugbauteils umfasst die folgenden Schritte:
- Bereitstellen eines Funktionselementes 2 aus einem ersten polymeren Werkstoff 3,
- Verbinden eines Befestigungselementes 4 aus einem zweiten polymeren Werkstoff 5 mit dem Funktionselement 2,
wobei der zweite polymere Werkstoff 5 metallische Detektionselemente 6 umfasst, die eine Detektion des Befestigungselementes 4 und/oder von Teilen des Befestigungselementes 4 ermöglichen. Hierbei erfolgt das Bereitstellen des Funktionselementes 1 durch einen Spritzgussschritt in einem Spritzgusswerkzeug und das Verbinden des Befestigungselementes 4 durch ein stoff- und/oder kraft- und/oder formschlüssiges Verbinden während des Spritzgussschrittes. Das Befestigungselement 4 wird folglich durch eine Umspritzung in das Funktionselement 2 eingebettet. Das Verfahren zur Herstellung des Kraftfahrzeugbauteils 1 weist zudem einen Kontrollschritt zur Erkennung von fehlerhaft hergestellten Bauteilen 1 auf, wobei bei Vorliegen eines fehlerhaften Bauteiles 1 in einem Schritt a) das Befestigungselement 4 von dem Funktionselement 2 separiert wird, um das Funktionselement 2 oder Teile des Funktionselementes 2 und/oder das Befestigungselement 4 oder Teile des Befestigungselementes 4 als Rücklaufmaterial nutzen zu können, wobei in einem Schritt b) in dem Rücklaufmaterial des Funktionselementes 2 ein nicht-separiertes Befestigungselement 4 oder nicht-separierte Teile des Befestigungselementes 4 mittels einer, die metallischen Detektionselemente 6 erfassenden, Detektionsvorrichtung erkannt und bei Vorhandensein eines Befestigungselementes 4 oder von Teilen des Befestigungselementes 4 in dem Rücklaufmaterial des Funktionselementes 2 der Schritt a), und vorzugsweise auch der Schritt b), wiederholt wird, bis kein Befestigungselement 4 oder keine Teile des Befestigungselementes 4 in dem Rücklaufmaterial des Funktionselementes 2 mehr vorhanden ist oder sind.

Die Fig. 5 zeigt eine weitere Teilansicht des erfindungsgemäßen Kraftfahrzeugbauteils aus Fig. 4, wobei hier die beiden Befestigungselemente 4 mit dem Funktionselement 2 mittels eines Klebstoffes miteinander verbunden sind.

In allen vorstehend beschriebenen Ausführungsbeispielen und Verfahren können die metallischen Detektionselemente 6 platten-, kugel- oder nadelförmig ausgebildet sein und können Aluminium und/oder Kupfer und/oder Nickel und/oder Kobalt und/oder Chrom und/oder Eisen und/oder Oxide der vorgenannten Metalle umfassen.

## Patentansprüche

1. Kraftfahrzeugbauteil (1) mit
- einem Funktionselement (2) aus einem ersten polymeren Werkstoff (3) und mit
- wenigstens einem mit dem Funktionselement (2) verbundenen Befestigungselement (4) aus einem zweiten polymeren Werkstoff (5), wobei
der zweite polymere Werkstoff (5) metallische Detektionselemente (6) umfasst, die eine Detektion des Befestigungselementes (4) und/oder von Teilen des Befestigungselementes (4) ermöglichen,
**dadurch gekennzeichnet, dass**
das Funktionselement (2) ein blasgeformtes oder spritzgegossenes Funktionselement (2) ist, wobei
das Befestigungselement (4) durch eine Schraubenaufnahme oder eine Schraube oder ein Rastelement oder ein Verschweißungselement gebildet ist und, wobei
das Kraftfahrzeugbauteil (1) ein Luftleitelement, ein Verkleidungsteil oder eine Zierleiste ist.

2. Kraftfahrzeugbauteil nach Anspruch 1, **dadurch gekennzeichnet, dass** das Befestigungselement (4) form- und/oder kraft- und/oder stoffschlüssig verbunden ist.

3. Kraftfahrzeugbauteil (1) nach einem der vorstehenden Ansprüche, **dadurch gekennzeichnet, dass** der zweite polymere Werkstoff (5) Verstärkungsfasern und/oder Verstärkungspartikel umfasst.

4. Kraftfahrzeugbauteil (1) nach einem der vorstehenden Ansprüche, **dadurch gekennzeichnet, dass** die metallischen Detektionselemente (6) platten-, kugel- oder nadelförmig ausgebildet sind.

5. Kraftfahrzeugbauteil (1) nach einem der vorstehenden Ansprüche, **dadurch gekennzeichnet, dass** die metallischen Detektionselemente (6) Aluminium und/oder Kupfer und/oder Nickel und/oder Kobalt und/oder Chrom und/oder Eisen und/oder Oxide der vorgenannten Metalle umfassen.

6. Verfahren zur Herstellung eines Kraftfahrzeugbauteils (1), umfassend die folgenden Schritte:
- Bereitstellen eines Funktionselementes (2) aus einem ersten polymeren Werkstoff (3),
- Verbinden eines Befestigungselementes (4) aus einem zweiten polymeren Werkstoff (5) mit dem Funktionselement (2), wobei
der zweite polymere Werkstoff (5) metallische Detektionselemente (6) umfasst, die eine Detektion des Befestigungselementes (4) und/oder von Teilen des Befestigungselementes (4) ermöglichen,
**dadurch gekennzeichnet, dass**
das Bereitstellen des Funktionselementes (2) durch einen Blasformungsschritt in einem Blasformwerkzeug oder durch einen Spritzgussschritt in einem Spritzgusswerkzeug erfolgt und,
dass ein Kontrollschritt zur Erkennung von fehlerhaft hergestellten Bauteilen (1) vorgesehen ist, wobei bei Vorliegen eines fehlerhaften Bauteiles (1) in einem Schritt a) das Befestigungselement (4) von dem Funktionselement (2) separiert wird, um das Funktionselement (2) oder Teile des Funktionselementes (2) und/oder das Befestigungselement (4) oder Teile des Befestigungselementes (4) als Rücklaufmaterial nutzen zu können, wobei in einem Schritt b) in dem Rücklaufmaterial des Funktionselementes (2) ein nicht-separiertes Befestigungselement (4) oder nicht-separierte Teile des Befestigungselementes (4) mittels einer, die metallischen Detektionselemente (6) erfassenden, Detektionsvorrichtung erkannt und bei Vorhandensein eines Befestigungselementes (4) oder von Teilen des Befestigungselementes (4) in dem Rücklaufmaterial des Funktionselementes (2) der Schritt a) wiederholt wird, bis kein Befestigungselement (4) oder keine Teile des Befestigungselementes (4) in dem Rücklaufmaterial des Funktionselementes (2) mehr vorhanden ist oder sind.

7. Verfahren zur Herstellung eines Kraftfahrzeugbauteils (1) nach Anspruch 6, **dadurch gekennzeichnet, dass** das Verbinden des Befestigungselementes (4) durch ein stoff- und/oder kraft- und/oder formschlüssiges Verbinden während des Blasformschrittes oder während des Spritzgussschrittes erfolgt.

8. Verfahren zur Herstellung eines Kraftfahrzeugbauteils (1) nach Anspruch 6 oder 7, **dadurch gekennzeichnet, dass** auch der Schritt b) wiederholt wird, bis kein Befestigungselement (4) oder Teilen des Befestigungselementes (4) in dem Rücklaufmaterial des Funktionselementes (2) mehr vorhanden ist oder sind.

## Claims

1. Motor vehicle component (1) with
- a functional element (2) of a first polymer material (3) and with
- at least one fastening element (2) of a second polymer material (5), connected to the functional element (2), wherein
the second polymer material (5) includes metallic detection elements (6), which allow detection of the fastening element (4) and/or of parts of the fastening element (4),
**characterized in that**
the functional element (2) is a blow-molded or injection-molded functional element (2), wherein
the fastening element (4) is formed by a screw receptacle or a screw or a latching element or a weld element and, wherein
the motor vehicle component (1) is an air-guiding element, a covering part, or a trim strip.

2. Motor vehicle component according to claim 1, **characterized in that** the fastening element (4) is connected via a form closure and/or force closure fit and/or bonding closure.

3. Motor vehicle component (1) according to one of the preceding claims, **characterized in that** the second polymer material (5) includes reinforcing fibers and/or reinforcing particles.

4. Motor vehicle component (1) according to one of the preceding claims, **characterized in that** the metallic detection elements (6) are of plate-shaped, spherical, or needle-shaped design.

5. Motor vehicle component (1) according to one of the preceding claims, **characterized in that** the metallic detection elements (6) include aluminum and/or copper and/or nickel and/or cobalt and/or chromium and/or iron and/or oxides of the aforementioned metals.

6. A method for producing a motor vehicle component (1), including the following steps:
- Providing a functional element (2) of a first polymer material (3),
- Connecting a fastening element (4) of a second polymer material (5) with the functional element (2), wherein
the second polymer material (5) includes metallic detection elements (6), which allow a detection of the fastening element (4) and/or of parts of the fastening element (4),
**characterized in that**
the provision of the functional element (2) takes place through a blow-molding step in a blow molding tool or through an injection-molding step in an injection molding tool, and
**in that** a verification step is provided for recognizing faultily-manufactured components (1), wherein in the case of an existing faulty component (1), the fastening element (4) is separated from the functional element (2) in a step a), to be able to use the functional element (2) or parts of the functional element (2), and/or the fastening element (4) or parts of the fastening element (4) as recycling material, wherein, in a step b), a non-separated fastening element (4), or non-separated parts of the fastening element (4) are recognized in the recycling material of the functional element (2) by means of a detection device detecting the metallic detection elements (6), and step a) is repeated in case of an existing fastening element (4) or of parts of the fastening element (4) in the recycling material of the functional element (2), until no fastening element (4) or no parts of the fastening element (4) is/are present any longer in the recycling material of the functional element (2).

7. The method for producing a motor vehicle component (1) according to claim 6, **characterized in that** the connection of the fastening element (4) takes place through a bonding closure and/or force closure and/or form closure during the blow-molding step or during the injection-molding step.

8. The method for producing a motor vehicle component (1) according to claims 6 or 7, **characterized in that** step b) is also repeated, until no fastening element (4) or no parts of the fastening element (4) exist(s) in the recycling material of the functional element (2) any longer.

## Revendications

1. Composant de véhicule automobile (1), comprenant
- un élément fonctionnel (2) constitué d'un premier matériau (3) polymère, et comprenant
- au moins un élément de fixation (4) relié à l'élément fonctionnel (2), constitué d'un second matériau (5) polymère,
le second matériau (5) polymère comprenant des éléments de détection (6) métalliques qui permettent une détection de l'élément de fixation (4) et/ou de parties de l'élément de fixation (4),
**caractérisé en ce que**
l'élément fonctionnel (2) est un élément fonctionnel (2) moulé par soufflage ou moulé par injection,
'élément de fixation (4) étant formé par un logement de vis ou par une vis ou par un élément d'enclenchement ou par un élément de soudage, et
le composant de véhicule automobile (1) étant un élément de guidage d'air, un élément de revêtement ou une bande décorative.

2. Composant de véhicule automobile (1) selon la revendication 1, **caractérisé en ce que** l'élément de fixation (4) est relié par adhérence de forme et/ou par adhérence de force et/ou par adhérence de matière.

3. Composant de véhicule automobile (1) selon l'une quelconque des revendications précédentes, **caractérisé en ce que** le second matériau (5) polymère comprend des fibres de renforcement et/ou des particules de renforcement.

4. Composant de véhicule automobile (1) selon l'une quelconque des revendications précédentes, **caractérisé en ce que** les éléments de détection (6) métalliques sont réalisés en forme de plaque, de bille ou d'aiguille.

5. Composant de véhicule automobile (1) selon l'une quelconque des revendications précédentes, **caractérisé en ce que** les éléments de détection (6) métalliques comprennent de l'aluminium et/ou du cuivre et/ou du nickel et/ou du cobalt et/ou du chrome et/ou du fer et/ou des oxydes des métaux mentionnés ci-dessus.

6. Procédé de fabrication d'un composant de véhicule automobile (1), comprenant les étapes suivantes :
- fourniture d'un élément fonctionnel (2) constitué d'un premier matériau (3) polymère,
- liaison, avec l'élément fonctionnel (2), d'un élément de fixation (2) constitué d'un second matériau (5) polymère,
le second matériau (5) polymère comprenant des éléments de détection (6) métalliques qui permettent une détection de l'élément de fixation (4) et/ou de parties de l'élément de fixation (4),
**caractérisé en ce que**
la fourniture de l'élément fonctionnel (2) est réalisée par une étape de moulage par soufflage dans un outil de moulage par soufflage ou par une étape de moulage par injection dans un outil de moulage par injection, et
**en ce qu'**une étape de contrôle destinée à identifier des composants (1) fabriqués de manière défectueuse est ménagée, l'élément de fixation (4), en cas de présence d'un composant (1) défectueux, étant séparé de l'élément fonctionnel (2) dans une étape a) afin de pouvoir utiliser l'élément fonctionnel (2) ou des parties de l'élément fonctionnel (2) et/ou l'élément de fixation (4) ou des parties de l'élément de fixation (4) en tant que matière de retour, dans une étape b), un élément de fixation (4) non séparé ou des parties non séparées de l'élément de fixation (4) étant identifié(es) dans la matière de retour de l'élément fonctionnel (2) au moyen d'un dispositif de détection détectant les éléments de détection (6) métalliques, et en cas de présence d'un élément de fixation (4) ou de parties de l'élément de fixation (4) dans la matière de retour, l'étape a) est répétée jusqu'à ce qu'il n'y ait plus d'élément de fixation (4) ou plus de parties de l'élément de fixation (4) dans la matière de retour de l'élément fonctionnel (2).

7. Procédé de fabrication d'un composant de véhicule automobile (1) selon la revendication 6, **caractérisé en ce que** la liaison de l'élément de fixation (4) est réalisée par une liaison par adhérence de matière et/ou adhérence de force et/ou adhérence de forme pendant l'étape de moulage par soufflage ou pendant l'étape de moulage par injection.

8. Procédé de fabrication d'un composant de véhicule automobile (1) selon la revendication 6 ou 7, **caractérisé en ce que** l'étape b) est également répétée jusqu'à ce qu'il n'y ait plus d'élément de fixation (4) ou plus de parties de l'élément de fixation (4) dans la matière de retour de l'élément fonctionnel (2).
